(19) Europäisches Patentamt
European Patent Office
Office européen des brevets

(11) EP 2 002 889 A2

(12) EUROPEAN PATENT APPLICATION
published in accordance with Art. 153(4) EPC

(43) Date of publication:
17.12.2008 Bulletin 2008/51

(51) Int Cl.:
B01J 20/18 (2006.01)　　　B01J 20/28 (2006.01)

(21) Application number: 07737939.4

(22) Date of filing: 07.03.2007

(86) International application number:
PCT/JP2007/054425

(87) International publication number:
WO 2007/105557 (20.09.2007 Gazette 2007/38)

(84) Designated Contracting States:
AT BE BG CH CY CZ DE DK EE ES FI FR GB GR
HU IE IS IT LI LT LU LV MC MT NL PL PT RO SE
SI SK TR

(30) Priority: 10.03.2006　JP 2006065848
13.04.2006　JP 2006110846
24.05.2006　JP 2006144166
27.12.2006　JP 2006352048
05.03.2007　JP 2007054227

(71) Applicant: Kyodo Printing Co., Ltd.
Bunkyo-ku, Tokyo 1120002 (JP)

(72) Inventors:
• MORINAKA, Yuriko
Tokyo 112-0002 (JP)
• OTOMO, Hitoshi
Tokyo 112-0002 (JP)
• OGAWA, Tatsuya
Tokyo 112-0002 (JP)

(74) Representative: Gervasi, Gemma et al
Notarbartolo & Gervasi S.p.A.
Corso di Porta Vittoria, 9
20122 Milano (IT)

(54) PROCESS FOR PRODUCTION OF ADSORBENT-CONTAINING FORMS AND ADSORBENT-CONTAINING FORMS

(57) The present invention is to provide a method for manufacturing adsorbent-containing compact wherein the adsorbent-containing compact has 70 weight% or more of high contents of zeolite in order to maintain its high hardness and adsorbability. The present invention is to provide a method for manufacturing adsorbent-containing compact which is an easy manufacturing method with high safety even though the respective dies are not used, and to provide an adsorbent-containing compact obtained from the method for manufacturing the same. The method for manufacturing adsorbent-containing compact according to the present invention is **characterized in that**:

A method for manufacturing adsorbent-containing compact comprising the steps of:

forming a silane alkoxide hydrolyzed solution containing silane alkoxide and hydrochloric acid;

mixing hydrophobic zeolite in said silane alkoxide hydrolyzed solution;

hardening the mixed wet gel containing zeolite in to a wet gel body having more than 0% to 10% or lower of deformation ratio;

cutting said wet gel body;

drying said cut wet gel body to form a dry gel body. The adsorbent-containing compact according to the present invention is **characterized in that** it is obtained from the method of manufacturing the same.

EP 2 002 889 A2

## Description

### Related Art

The present invention related to a method for manufacturing adsorbent-containing compact and an adsorbent-containing compact. More particularly, the present invention relates to a method for manufacturing adsorbent-containing compact which can be formed with hydrophobic zeolite by the sol-gel method without the use of any molds and wherein the compact contains zeolite with high concentration, and to an adsorbent-containing compact obtained from the method.

### Background art

The zeolite has been used for adsorbing the gas composition containing moisture. However, there are several problems that it tends to adsorb the moisture component rather than the gas composition in the high humidity environment, and that the zeolite produces the heat by adsorbing the moisture in case of mixing it with the inorganic binder to manufacture the compact.

Patent-related document 1 discloses a method for manufacturing the adsorbent composition in which the mixed solution of the metal alkoxide solution and the synthetic zeolite is hydrolyzed to disperse the synthetic zeolite in the porous glass, and then dried. However, the content of the synthetic zeolite is in the range of 30 weight% or lower which is low content.

Patent-related document 2 discloses a inorganic composite functional material in which the mixed body of the organic metal alkoxide solution and the inorganic powder is processed in accordance with the sol-gel method and the inorganic composite gel is sintered at 500˚C. However, the content of the synthetic zeolite is in the range of 15 weight% or lower which is low content.

Patent-related document 3 discloses the zeolite porous body in which the inorganic binder clay is mixed and dispersed with the physical force such as ball mill and sintered at 250˚C or more.

In order to manufacture the compact along with maintaining the adsorption of the zeolite powder, it is necessary to contain 70 weight% or more of zeolite powder in the compact, and it is desirable to maintain its hardness. However, it is difficult, since the zeolite powder is less agminated. In addition, although the beads having 90 weight% of zeolite has been manufactured (see Patent-related document 4), it is only in the form of beads, since the clay material as binder is mixed and the bead is manufactured using the granulating machine.

Hence, a method for manufacturing a compact with high hardness having 70 weight% or more of zeolite is desired wherein the method is capable of forming a configuration which is adjusted in its application including in the form of fine configuration at the lower temperature of the drying environment for the sinter without use of the large scale of apparatus.

In addition, in case of molding the compact with respective dies, it is impossible to prevent possible lack and chippage of the compact due to inserting in and removing from the die.

Patent-related document 1
Japanese Patent Application Publication No. 293371/1993
Patent-related document 2
Japanese Patent Application Publication No. 285843/1991
Patent-related document 3
Japanese Patent Application Publication No. 297211/1987
Patent-related document 4
Japanese Patent Application Publication No. 171554/1989

### Disclosure of Invention

### Problem to be solved

The object of the present invention is to provide a method for manufacturing adsorbent-containing compact and an adsorbent-containing compact obtained from the method for manufacturing wherein the adsorbent-containing compact has 70 weight% or more of high contents of zeolite in order to maintain its high hardness and adsorbability.

The other object of the present invention is to provide a method for manufacturing adsorbent-containing compact which is an easy manufacturing method with high safety even though the respective dies are not used.

**Means for solving the problem**

In accordance with the present invention, it is provided in method for manufacturing adsorbent-containing compact characterized in that:

A method for manufacturing adsorbent-containing compact comprising the steps of:
forming a silane alkoxide hydrolyzed solution containing silane alkoxide and hydrochloric acid;
mixing hydrophobic zeolite in said silane alkoxide hydrolyzed solution;
hardening the mixed wet gel containing zeolite in to a wet gel body having more than 0% to 10% or lower of deformation ratio;
cutting said wet gel body;
drying said cut wet gel body to form a dry gel body.

In addition, in accordance with the present invention, the adsorbent-containing compact obtained from the method for manufacturing adsorbent-containing compact is provided.

**Effect of Invention**

As mentioned above, the present invention provides a condition which is easily molded, and can prepare the wet gel having high content of zeolite. According, it is possible to obtain the high hardness compact having high content of zeolite without use of any apparatuses including kneading machine and granulating machine, and of respective dies.
In addition, the obtained compact can adsorb organic gasses and orders in addition to the moisture with high efficiency, and can be applied into various applications, since the hydrophobic zeolite is used as zeolite in the present invention.
In addition, the compact having high content of zeolite can maintain its hardness rather than that of organic resins as the binder. The compact can be manufactured to sinter and dry at lower temperature than that of the clay material as used. The compact can be manufacture without use of granulating machine.
The method according to the present invention can mold the adsorbent without using respective dies. Accordingly, the method can eliminate the operations of inserting in and removing from the die, thereby simplifying the process. Lack and chippage of the compact due to removing from the die is reduced. It is possible to manufacture the compact with high productivity.

**Best mode for carrying out the Invention**

Hereinafter, the aspect of carrying out the present invention will be explained in detail.
In the present invention, the hydrophobic zeolite is added to the hydrolyzed solution in accordance with the sol-gel method to obtain the wet gel body having more than 0% to 10% or less of the deformation rate. This is because it is difficult to add the zeolite in high amount to the silicagel (the gelatinized silane alkoxide (TEOS))... and it is necessary to add it in the sol state.
As the hydrolyzed solution of the present invention, it is necessary to use the silane alkoxide hydrolyzed solution (sol) containing hydrochloric acid and silane alkoxide (TEOS). This is because the zeolite is precipitated in the hydrolyzed solution containing silane coupling agent, and polysiloxane and silane alkoxide oligomer aqueous solution have high molecular weight and zeolite cannot be dispersed in such a solution with high amount. In addition, when, instead of the strong acid such as hydrochloric acid used in the silane alkoxide hydrolyzed solution, the weak acid such as acetic acid is used in the solution, the zeolite will be precipitated.
As the content of alcohol and water as used in the solvent of the silane alkoxide hydrolyzed solution, water concentration is in the range of 5 weight% or more, preferably 20 weight%. In case of increasing the water ratio in the solvent of the silane alkoxide hydrolyzed solution, the beginning of gelatinization becomes early. This is because it is known that, in case of hydrolyzation of silane alkoxide, increase of water content will lead to form the three dimensional net-like SiO bonded polymer having high ratio of OH group, and the addition of the hydrophobic zeolite will lead to be easily gelatinized. In case of less than 5 weight% of water concentration, the hydrolyzation of silane alkoxide is not progressed. In addition, if the silane alkoxide hydrolyzed solution is prepared only from the alcohol solvent and mixed with the hydrophobic zeolite, the gelatinization cannot be occurred, and the wet gel cannot be manufactured.
The alcohol used in the solvent of the silane alkoxide hydrolyzed solution has preferably 4 or more of carbon atoms, lower alcohol such as methanol and ethanol will induce the beginning of the gelatinization with short time. In case of higher alcohol having 5 or more of carbon atoms, such an alcohol will inhibit the wet gelatinization between the hydrophobic zeolite powder and the silane alkoxide hydrolyzed solution, since such an alcohol has high molecular weight.
The concentration of hydrochloric acid (HCl) used as the acid catalyst for the silane alkoxide hydrolyzed solution is preferably in the range of 0.01 to 0.4 in the molar ratio of [HCl]/[TEOS]. In case of less than 0.01 of the molar ratio of [HCl]/[TEOS], the hydrolyzation of silane alkoxide is hard to be in progress, in case of more than 0.4 of the molar ratio of [HCl]/[TEOS], the acid concentration becomes increase, thereby becoming dangerous in its handling. The increase of HCl concentration will lead to delay the beginning of the gelatinization of silane alkoxide hydrolyzed solution. In case of HCl catalyst, the silane alkoxide is hydrolyzed to convert it into $SiO_2$ linear polymer having OH group. Accordingly the wet gel containing the hydrophobic zeolite powder is manufactured. In case of high concentration of HCl, it is considered that the hydrolyzation is more in progress, thereby entangling $SiO_2$ linear molecules, and the beginning of the gelatinization of wet gel will delay even in case of addition of the hydrophobic zeolite.

In case of using a base catalyst for the catalyst of the silane alkoxide hydrolyzed solution, the silane alkoxide will be hydrolyzed to invert it into $SiO_2$ spherical particle having less of OH group. Accordingly, it is hard to form the wet gel even in case of adding the hydrophobic zeolite powder.

The sol concentration of the silane alkoxide hydrolyzed solution is preferably in the range of 50 weight% or lower, it will be hardened by addition of the hydrophobic zeolite in case of high sol concentration. The lower limitation of the sol concentration is more preferably in the range of 15 to 35 weight%, since it is hard to mix the hydrophobic zeolite in case of less solvent.

The silane alkoxide hydrolyzed solution is obtained from mixing at room temperature for 1 minute or more. It is preferable since the hardness of the compact becomes high by mixing for 5 hours or more.

Further, the hardness becomes high by storing the silane alkoxide hydrolyzed solution as obtained by mixing, at room temperature (23°C±2°C) for 1 week to 1 month.

In the present invention, it is necessary to use the hydrophobic zeolite as the zeolite which is added to the silane alkoxide hydrolyzed solution. This is normally because the water absorbable zeolite widely used as the zeolite is added to immediately product heat around 200°C by adsorbing the moisture of the hydrolyzed solution. In addition, this is because it is easy to handle it in view of workability and safety, since the strong acid such as hydrochloric acid will be handled during the preparation of the sol.

In addition, the water absorbable zeolite will be precipitated, if the water of the hydrolyzed solution is replaced with alcohol solution so as to prevent produce heat by adsorbing the moisture. Accordingly, it is possible to gelatinize.

The hydrophobic zeolite used in the present invention is obtained from a zeolite originated from natural resources or a synthetic zeolite by a method that the zeolite is processed to remove the aluminum with mineral acid, and a method for directly manufacturing it in which silica, alumina, alkaline resources and organic mineralizer are mixed to crystallize. The zeolite is a porous granular substance which is used for separating any substances based on the difference of molecular weight, and has a uniform pore structure. The zeolite act as screening by adsorbing small molecules entered in the cavity of the pore. Accordingly, the possible adsorbable molecules are determined by the type of zeolite. In case of adsorbing gas composition such as organic composition, the size of the pore of the zeolite may be greater than that of the molecule to be adsorbed. Normally, the zeolite is preferably eight-, ten- or twelve-membered zeolite containing oxygen in the pore entry. In the present invention, it is preferably of preferentially adsorbing the organic gasses and odorous component rather than the moisture.

In case of adding the hydrophobic zeolite in the silane alkoxide hydrolyzed solution, it is hard to mix it in the powder form when the high amount of the hydrophobic zeolite is added in order to highly contain the zeolite like as the present invention, and it is difficult to quantify it in view of manufacturing, since it is fine powder. Hence, in the present invention the hydrophobic zeolite powder is processed into the paste form, and mixed with the silane alkoxide hydrolyzed solution. By doing so, it is easy to handle it in view of manufacturing, since the hydrophobic zeolite can be easily and quantitatively added. In addition, it is possible to handle it at clean room, since the hydrophobic zeolite is in the paste form, not in the powder form. During the mixing, the paste of the hydrophobic zeolite may be added to the silane alkoxide hydrolyzed solution, or the silane alkoxide hydrolyzed solution may be added to the paste of the hydrophobic zeolite.

In order to form the hydrophobic zeolite in the paste form, if water is used as solvent for forming the hydrophobic zeolite in the paste form, both are not adequately mixed. Accordingly, water is not appropriate for the solvent. In addition, if the lower alcohol such as methanol and ethanol is used as the solvent, it is hard to maintain it in the paste form, since such an alcohol is easily vaporized. Accordingly, it is preferably that less volatile alcohols such as isopropyl alcohol and butanol are used.

It is necessary to highly set the wet gel concentration so as to harden the compact. Accordingly, the solvent content in the hydrophobic zeolite paste may be reduced, and the concentration of the hydrophobic zeolite may be increased. Preferably, the concentration of the hydrophobic zeolite in the paste is in the range of 30 to 60 weight%. In case of more than 60 weight%, it does not form the paste form, thereby remaining the hydrophobic zeolite powder.

Normally, in case of mixing the silane alkoxide hydrolyzed solution and the hydrophobic zeolite, it begin to form the wet gel, and the states of the wet gel containing zeolite are progress over time as follows.

(1) a state having fluidity (the state which cannot be maintained its shape on the planar surface)
(2) a state not having fluidity (in the clay form) ⋯more than 10% to 95% or less of deformation ratio

(3) a state not having fluidity (in the agar form) ···more than 0% to 10% or less of deformation ratio

In the present invention, the mixed material is introduced in the container such that the material is kept to have the fluidity, and the material is kept to stand in the container such that it is kept in the state not having fluidity like as in the agar form, that is, the deformation ratio is in the range of more than 0% to 10% or less to form the wet gel body. The deformation ratio can be set within the range as defined in the present invention to change the standing time. By using the wet gel body having more than 0% to 10% or less of the deformation ratio, the handling of the body becomes easy, and it can be cut with well accuracy of shape and size during the mircofabrication.

The deformation ratio of the present invention is estimated as follows. That is, in the environment of 23˚C/55% relative humidity,

(1) the wet gel body which is formed in the size of 15 mm of diameter and 5 mm of thickness is stand on the flat surface;
(2) 20 N of load is applied to the wet gel body with the cylinder having 10 mm of diameter (material: SUS304 stainless steel)
(3) at 3 second after the load is released (after the release of the load, the shape is kept in its state if any loads are not applied in it), the thickness of the wet gel body is measured;

and the deformation ratio is estimated in accordance with the following formula based on the obtained value.

$$\text{Deformation ratio} = (\text{deformed distance due to the load (mm)} / 5\text{mm}) \times 100\%$$

If the solvent content contained in the wet gel body is large, the contraction in volume is large during the first drying, thereby easily going brittle. Accordingly, the gel concentration of the wet gel body is preferably in the range of 30 weight% or more, especially, more preferably, in the range of 45 to 80 weight%. In addition, in case of using the hydrophobic zeolite as the paste form, the solvent is used during the manufacturing of the paste. Accordingly, it is necessary to reduce the solvent content of the silane alkoxide hydrolyzed solution.

The container is not limited. It is preferable that the materials are introduced into the planer container to form it in the sheet form. The obtained wet gel body in the sheet form not having fluidity is then cut with a blade, and dried in dependent on its use. If it is cut after the drying step as mentioned below, it is difficult to obtain the desired shape, due to the clacking of dry gel body. In addition, in case that the shape of the dry gel body is large, the contraction in volume becomes large. Thereby, the cracking may be occurred. In the present invention, the wet gel body in the particular form including sheet form is cut. Accordingly, the desired shape of the wet gel body is obtained in a short term and with large scale in comparison with the prior art of using the molds, thereby improving productivity.

In the compact as obtained in the present invention, the content of the hydrophobic zeolite is preferably in the range of 70 to 98 weight% in order to manufacture the compact with maintaining the adsorbability of the zeolite powder, more preferably in the range of 80 to 95 weight%, still more preferably in the range of 85 to 95 weight%. According to the compact with 85 to 95 weight% of the content of hydrophobic zeolite, the formation of the concave and convex surface during the change into the wet gel (in the agar form) having more than 0% to 10% or less of the deformation ratio prior to the cutting will be reduced, the compact with good dimensional accuracy of 0.01 or lower of the standard deviation will be manufacture. This is because the sol-gel component which reacts and changes in case of forming the wet gel (in the agar form) having more than 0% to 10% or less of the deformation ratio is reduced, and the formation of the concave and convex surface is reduced.

In addition, in the method for manufacturing according to the present invention, the water-based surface conditioner is added prior to mixing the hydrophobic zeolite, and the formation of the concave and convex surface is reduced, and the compact with good dimensional accuracy will be obtained. When the hydrophobic zeolite is mixed with silane alkoxide hydrolyzed solution to manufacture the wet gel body, the concave and convex surface in the crater form such as Benard Cells may be formed along with vaporization of the solvent and the gelatinization of the alkoxide. So, the variable in the height (thickness) of the compact to be manufactured by cutting the wet gel is occurred, and the dimensional accuracy of the compact may be reduced during the manufacturing thereof. By adding the water-based surface conditioner in the silane alkoxide hydrolyzed solution, the formation of the concave and convex surface can be reduced.

The example of the water-based surface conditioner main includes, as a main component, alcoholic alkoxylate, the fluorinated surfactant, acrylate copolymer and silicone surfactant. On the other hand, it is impossible to use the solvent surface conditioner, since it is not solved in the silane alkoxide hydrolyzed solution. The conditioner of the acrylate copolymer, silicone surfactant and fluorinated surfactant as the main component may occur the fine bubbling during mixing the hydrophobic zeolite, and may remain the micro bubble within the compact as obtained. The surface area of the zeolite compact which is in contact with the ambient air is increased to contain the micro bubble within the compact, thereby improving the adsorbability of the compact. The micro bubble which is created at mixing the hydrophobic zeolite will gradually disappear at the surface thereof in contact with air. Accordingly, there is really little that the concave and convex surface of the wet gel body is formed due to such a bubble. The air bubble will be within the compact. The ratio of the micro bubble within the compact can be adjusted by the additive content of the surface conditioner. The fluorinated surfactant is superior in view of an ability to be foamed, and it is preferable in view of the adsorbability. The alcoholic alkoxylate will not occur the bubbling during mixing the hydrophobic zeolite. Accordingly, the air bubbling will not be remained within the compact. The compact not having the air bubbles therewithin is preferable in view of its strength, since the hydrophobic zeolite in such a compact is extremely dense rather than that of the compact having the micro bubbles therewithin.

The additive amount of the surface conditioner is preferably in the range of 0.01 to 1 weight%, more preferably in the range of 0.1 to 0.5 weight%, relative to the solid content of the silane alkoxide hydrolyzed solution. In case of less than 0.01 weight%, the formation of the concave and convex surface of the compact is less reduced. On the other hand, in case of more than 1 weight%, the adsorbability of the adsorbent-containing compact may be affected. In addition, the silicone surfactant and fluorinated surfactant may form more of bubbles. So, the bubbles may be remained only within the compact, and the concave and convex surface may be formed due to part of the bubbles. Accordingly, the height of the compact may be deviated, and the compact will be brittle due to the high ratio of the bubble.

The adsorbent-containing compact according to the present invention has high content of the hydrophobic zeolite, that is, has low content of the binder. Accordingly, it is difficult to manufacture a compact maintaining its hardness, and it is necessary not to get brittle during the manufacturing the fine shape thereof.

So, in the present invention, it is preferable as a drying method of the wet gel body containing the zeolite that the first drying is performed to vaporize the moisture and solvent of the gel, and the second drying is further performed to crystallize the hydrophobic zeolite and to improve the hardness. As the first drying, it can be dried at room temperature (23°C±2°C) for vaporizing the moisture and alcohol, and the temperature is preferably in the range of 23 to 120°C, more preferably in the range of 23 to 60°C. The drying time is preferably in the range of 2 to 30 minutes. The temperature for the second drying is preferably in the range of 140°C or more, since $SiO_2$ within the hydrophobic zeolite in the dry gel body is not crystallized, and the hardness thereof is low. The method according to the present invention can be performed at the lower temperature for the drying than that of the prior art. Accordingly, the upper limit is in the range of 800°C or less, more preferably in the range of 200 to 350°C. The drying time for the second drying is preferably in the range of 1 to 3 hours.

**Embodiment**

Hereinafter, the present invention will be explained in detail with reference of particular embodiments. The present invention is not limited to such an embodiment.

(Embodiment 1-1)

| Silane alkoxide (TEOS) | 25 g |
| Purified water | 23.5 g |
| Methanol | 37.6 g |
| 2N hydrochloric acid | 7.0 g (Molar ratio of [HCl] / [TEOS]=0.12-) |

The materials as mentioned above were mixed at room temperature (23°C) for 24 hours to prepare the silane alkoxide hydrolyzed solution (the sol concentration: 26.8 weight%). Then, the solution was mixed with 46.16 g of hydrophobic zeolite (Product name: HiSiV3000, UNION SHOWA K.K.), introduced into 12 cm petri dish placed on the mount kept in a horizontal position, and stand in the environment of 23°C and 55% relative humidity to prepare the wet gel containing zeolite (the gel concentration: 45 weight%), wherein the wet gel is in the sheet form, has 3 mm of thickness, has no fluidity and is the agar form. The deformation ratio of the wet gel body as prepared for the measurement was 2%.

The obtained wet gel body containing zeolite was cut to the size of 3×3×3 mm, and then dried at 100°C for 5 minutes as the first drying to prepare the dry gel body.

Next, the dry gel body was dried in the electrical furnace at 300°C for 2 hours as the second drying to obtain the compact having 80 weight% of hydrophobic zeolite.

The obtained zeolite compact was evaluated in accordance with the following evaluation method. The result is shown in Table 1.

<Evaluation>

[Hardness]

The cylindrical compact having the size of diameter 2 mmXheight 3 mm was prepared, and the peak value at pushing, crushing and breaking was measured using the digital force gauge (FGC-50, NIDEC-SHIMPO CORPORATION) as the hardness of the compact. The measured values is an average value for N=7.

[Adsorption]

In order to examine the adsorbing property of the gas component in the compact, the cylindrical compact having the size of 2 mm diameter $\times$ 3 mm height and a pill containing triethylamine (content of an active ingredient: 10%) was introduced into the sealed container, and stand for 240 hours in the environment of 25°C and 50% relative humidity. Then, the adsorption of triethylamine was detected and examined using GC-MS apparatus (Automass, JEOL Ltd.). The result is shown in Table 1.

[Height accuracy (standard deviation σ)]

The height (thickness) of the compact having the sized of $3\times3\times3$mm was measured at three positions using the microscope, and the difference in height ((maximum value)-(minimum value)) in one compact was estimated. Such a measurement was performed at 20 compacts, and the standard deviation thereof was estimated.

(Embodiments 1-2 to 1-8)

The silane alkoxide hydrolyzed solution was manufactured as mentioned in the Embodiment 1-1. In addition, these embodiments were performed in accordance with the Embodiment 1-1, except that the content of the hydrophobic zeolite, the storing time of the hydrolyzed solution, the gel concentration, the condition for drying and the preservation time as shown in Table 1 were changed to prepare the compact, and evaluated. The result is shown in Table 1.
[Table 1]

| | Embodiment 1-1 | Embodiment 1-2 | Embodiment 1-3 | Embodiment 1-4 | Embodiment 1-5 | Embodiment 1-6 | Embodiment 1-7 | Embodiment 1-8 |
|---|---|---|---|---|---|---|---|---|
| Content of zeolite | 80 weight% | 80 weight% | 80 weight% | 80 weight% | 80 weight% | 80 weight% | 80 weight% | 80 weight% |
| Preservation term of TEOS hydrolyzed solution | 24 hours | 24 hours | 24 hours + 2 weeks | 24 hours | 24 hours | 24 hours | 24 hours | 24 hours |
| Deformation ratio | 2% | 2% | 2% | 2% | 1% | 8% | 2% | 2% |
| Concentration of wet gel | 45 weight% | 45 weight% | 45 weight% | 55 weight% | 45 weight% | 45 weight% | 45 weight% | 45 weight% |
| Condition for first drying | 100°C for 5 minutes | 100°C for 5 minutes | 100°C for 5 minutes | 100°C for 5 minutes | 100°C for 5 minutes | 100°C for 5 minutes | 25°C for 15 minutes | 60°C for 10 minutes |
| Condition for second drying | 300°C for 2 hours | none | 300°C for 2 hours | 300°C for 2 hours | 300°C for 2 hours | 300°C for 2 hours | 300°C for 2 hours | 300°C for 2 hours |
| Hardness (N) | 4.41 | 2.57 | 6.81 | 10.72 | 4.36 | 4.46 | 4.33 | 4.42 |
| Adsorption of trimethylamine | Yes | Yes | Yes | Yes | Yes | Yes | Yes | Yes |
| Height (standard deviation σ) | 0.013 | 0.013 | 0.013 | 0.013 | 0.013 | 0.013 | 0.013 | 0.013 |

(Embodiments 2-1 to 2-3)

The silane alkoxide hydrolyzed solution was manufactured as mentioned in the Embodiment 1-1. In addition, these embodiments were performed in accordance with the Embodiment 1-1, except that the content of the hydrophobic zeolite as shown in Table 2 was changed to prepare the compact, and evaluated. The result is shown in Table 2.
[Table 2]

| | Embodiment 2-1 | Embodiment 2-2 | Embodiment 2-3 |
|---|---|---|---|
| Content of hydrophobic zeolite | 70 weight% | 85 weight% | 90 weight% |
| Concentration of wet gel | 45 weight% | 50 weight% | 59 weight% |
| Deformation ratio | 2% | 2% | 2% |
| Hardness (N) | 2.76 | 7.03 | 9.69 |
| Adsorption of trimethylamine | Yes | Yes | Yes |
| Height accuracy (standard deviation $\sigma$) | 0.015 | 0.004 | 0.002 |

According to Table 2, when the content of the hydrophobic zeolite is in the range of 85 weight% or more, the formation of the concave and convex surface was reduced, and the compact with the good height accuracy having 0.01 or lower of the standard deviation was obtained. This is also found from the fact that when the concave and convex surface was observed using the microscope (150 magnitude) and the content of the hydrophobic zeolite in the compact is 70 weight% as shown in the Embodiment 2-1, the surface has observed as the concave and convex surface like the crater form, while the compact of the Embodiments 2-2 and 2-3 has not observed to have the concave and convex surface.

(Embodiment 3-1)

The silane alkoxide hydrolyzed solution was prepared as mentioned in the Embodiment 1-1. 0.01g of the surface conditioner containing alcoholic alkoxylate as the main component (Product name: BYK-DYNWET800, Tetsutani Co. Ltd.) was added to the silane alkoxide hydrolyzed solution. Then, it was mixed with the hydrophobic zeolite (Product name: HiSiV3000) to manufacture the compact, and evaluated, as mentioned in the Embodiment 1-1.
In the evaluation, a further evaluation was performed using the value as obtained with GC-MS apparatus for evaluating the adsorbability of the trimethylamine. The result of such an evaluation is expressed in comparison with the adsorbability obtained in the Embodiment 1-1 as follows: less than 1.1 times: △; 1.1 times or more and less than 1.5 times: ○; and 1.5 times or more: ◎. In addition, as the state of the compact, the cut surface of the compact with the cutting machine, and the state of air bubble were observed with the microscope (10 magnitude). The result is shown in Table 3.

(Embodiments 3-2 to 3-11)

These embodiments were performed in accordance with the Embodiment 3-1, except that the surface conditioners were changed to the silicone surfactant (Product name: Disparlon, Kusumoto Chemicals Ltd.), the fluorinated surfactant (Product name: MEGAFACE, DIC Corporation) and the acrylate copolymer (Product name: BYK-381, Tetsutani Co. Ltd.) and the additive amount thereof were changed, as shown in Table 3 to prepare the compact, and evaluated. The result is shown in Table 3.
[Table 3]

| | Embod. 3-1 | Embod. 3-2 | Embod. 3-3 | Embod. 3-4 | Embod. 3-5 | Embod. 3-6 | Embod. 3-7 | Embod. 3-8 | Embod. 3-9 | Embod. 3-10 | Embod. 3-11 |
|---|---|---|---|---|---|---|---|---|---|---|---|
| Surface Conditioner | Water-based | Water-based | Water-based | Water-based | Water-based | Water-based | Water-based | Water-based | Water-based | Water-based | Water-based |
| Main composition | alcoholic alkoxylate | alcoholic alkoxylate | alcoholic alkoxylate | silicone | silicone | silicone surfactant | fluorinated | fluorinated surfactant | fluorinated surfactant | fluorinated surfactant | fluorinated surfactant |
| Additive amount | 0.1 weight% | 0.5 weight% | 0.01 weight% | 0.1 weight% | 0.2 weight% | 0.5 weight% | 0.01 weight% | 0.1 weight% | 0.5 weight% | 1.0 weight% | 0.1 weight% |
| Content of hydrophobic zeolite | 80 weight% | 80 weight% | 80 weight% | 80 weight% | 80 weight% | 80 weight% | 80 weight% | 80 weight% | 80 weight% | 80 weight% | 80 weight% |
| Deformation rate | 2% | 2% | 2% | 2% | 2% | 2% | 2% | 2% | 2% | 2% | 2% |
| Concentration of wet gel | 45 weight% | 45 weight% | 45 weight% | 45 weight% | 45 weight% | 45 weight% | 45 weight% | 45 weight% | 45 weight% | 45 weight% | 45 weight% |
| Hardness (N) | 4.38 | 4.43 | 4.41 | 4.31 | 4.30 | 3.89 | 4.36 | 4.35 | 3.95 | 3.26 | 4.33 |
| Adsorption of trimethylamine | Yes | Yes | Yes | Yes | Yes | Yes | Yes | Yes | Yes | Yes | Yes |
| Adsorbability | △ | △ | △ | △ | ○ | ◎ | ○ | ○ | ◎ | ◎ | ○ |
| State of compact | no bubble | no bubble | no bubble | no | some | bubbles | some | some | bubbles | bubbles | some bubbles |
| Height accuracy (Standard deviation σ) | 0.0020 | 0.0020 | 0.0025 | 0.0020 | 0.0020 | 0.0030 | 0.0021 | 0.0023 | 0.0030 | 0.0033 | 0.0020 |
| Concave and Convex on the surface | partially concave and convex | no concave and convex | partially concave and convex | partially concave and convex | partially concave and convex | no concave and convex | partially concave and convex | partially concave and convex | no concave and convex | no concave and convex | partially concave and convex |

According to Table 3, when the surface conditioner was added to the silane alkoxide hydrolyzed solution, the formation of the concave and convex surface was reduced, and the compact with the good height accuracy having 0.01 or lower of the standard deviation was obtained. Further, when the concave and convex surface was observed with the microscope (150 magnitude), the smooth concave and convex surface was partially observed in the compact as obtained in the Embodiments 3-1, 3-3 to 3-5, 3-7, 3-8 and 3-11, while the concave and convex surface was not observed in the compact as obtained in the Embodiments 3-2, 3-6, 3-9 and 3-10.

(Embodiment 4-1)

| Silane alkoxide (TEOS) | 25 g |
| Purified water | 20 g |
| 2N hydrochloric acid | 5 g (Molar ratio of [HCl] / [TEOS]=0.08) |

The materials as mentioned above were mixed at room temperature (23˚C) for 24 hours to prepare the silane alkoxide hydrolyzed solution (the sol concentration: 50 weight%). Then, 46.16 g of hydrophobic zeolite (Product name: HiSiV3000) and 46.16 g of isopropyl alcohol were mixed to prepare the paste of the hydrophobic zeolite (the content of the zeolite: 50 weight%). The paste of the hydrophobic zeolite was added to the silane alkoxide hydrolyzed solution, mixed, introduced into 12 cm petri dish placed on the mount kept in a horizontal position, and stand in the environment of 23˚C and 55% relative humidity to prepare the wet gel containing zeolite (the gel concentration: 40.5 weight%), wherein the wet gel is in the sheet form, has 3 mm of thickness, has no fluidity and is the agar form. The deformation ratio of the wet gel body as prepared for the measurement was 2%.

The obtained wet gel body containing zeolite was cut to the size of $3 \times 3 \times 3$ mm, and then dried at 25˚C for 15 minutes as the first drying to prepare the dry gel body.

Next, the dry gel body was dried in the electrical furnace at 300˚C for 2 hours as the second drying to obtain the compact having 80 weight% of hydrophobic zeolite.

The obtained zeolite compact was evaluated in accordance with the Embodiment 1-1. The result is shown in Table 4.

(Embodiments 4-2 to 4-3)

The embodiment was performed in accordance with the Embodiment 4-1, except that the compounding ratio of the hydrophobic zeolite and isopropylalcohol is changed in the preparation of the paste of the hydrophobic zeolite, the concentrations of the zeolite in the Embodiments 4-2 and 4-3 are 30 weight% and 60 weight%, respectively to prepare the compact, and evaluated. The result is shown in Table 4.

(Embodiment 4-4)

The embodiment was performed in accordance with the Embodiment 4-1, except that 65.6 g of the hydrophobic zeolite and 65.6 g of isopropylalcohol are mixed in the preparation of the paste to prepare the compact having 85 weight% of the content of the hydrophobic zeolite, and evaluated. The result is shown in Table 4.

(Embodiment 4-5)

The embodiment was performed in accordance with the Embodiment 4-1, except that 104 g of the hydrophobic zeolite and 104 g of isopropylalcohol are mixed in the preparation of the paste to prepare the compact having 90 weight% of the content of the hydrophobic zeolite, and evaluated. The result is shown in Table 4.

(Embodiments 4-6 to 4-7)

The embodiments were performed in accordance with the Embodiment 4-5, except that the compounding ratio of the hydrophobic zeolite and isopropylalcohol is changed in the preparation of the paste of the hydrophobic zeolite, the concentrations of the zeolite in the Embodiments 4-5 and 4-6 are 30 weight% and 60 weight%, respectively to prepare the compact, and evaluated. The result is shown in Table 4.

[Table 4]

| | Embodiment 4-1 | Embodiment 4-2 | Embodiment 4-3 | Embodiment 4-4 | Embodiment 4-5 | Embodiment 4-6 | Embodiment 4-7 |
|---|---|---|---|---|---|---|---|
| Content of hydrophobic zeolite | 80 weight% | 80 weight% | 80 weight% | 85 weight% | 90 weight% | 90 weight% | 90 weight% |
| Concentration of hydrophobic zeolite in the paste | 50 weight% | 30 weight% | 60 weight% | 50 weight% | 50 weight% | 30 weight% | 60 weight% |
| Concentration of wet gel | 40.5 weight% | 40.5 weight% | 40.5 weight% | 40.5 weight% | 40.5 weight% | 40.5 weight% | 40.5 weight% |
| Deformation ratio | 2% | 2% | 2% | 2% | 2% | 2% | 2% |
| Hardness (N) | 4.40 | 4.36 | 4.46 | 7.05 | 9.69 | 9.64 | 9.75 |
| Adsorption of trimethylamine | Yes | Yes | Yes | Yes | Yes | Yes | Yes |
| Height accuracy (Standard deviation $\sigma$) | 0.013 | 0.013 | 0.013 | 0.004 | 0.002 | 0.002 | 0.002 |

Even in case of using the paste of the hydrophobic zeolite, when the content of the hydrophobic zeolite was 85 weight%, the formation of the concave and convex surface was reduced, and the compact with the good height accuracy having 0.01 or lower of the standard deviation was obtained. In addition, when the concentration of the zeolite in the paste of the hydrophobic zeolite becomes high, it was observed that the hardness of the compact tend to become high, since the content of the solvent in the paste is reduced.

(Comparative example 1)

The silane alkoxide hydrolyzed solution was prepared, and then it was mixed with the hydrophobic zeolite to obtain the wet gel containing zeolite, wherein the wet gel has no fluidity and is the agar form, as mentioned in the Embodiment 1-1. The deformation ratio of the obtained wet gel body was 2%.
The obtained wet gel body containing zeolite having 12 cm of the diameter was not cut, and dried at 100°C for 5 minutes as the first drying to prepare the dry gel body. It was not possible to mold the dry gel body, since the cracking was occurred in the dry gel body due to the contraction in volume prior to the cutting.

(Comparative example 2)

The dry gel body which was dried as the first drying in the Comparative example 1 was further dried in the electrical furnace at 300°C for 2 hours. It was not possible to mold the dry gel body, since the cracking was occurred in the dry gel body due to the contraction in volume prior to the cutting.

(Comparative example 3)

| Silane alkoxide (TEOS) | 25 g |
| Purified water | 23.5 g |
| Methanol | 37.6 g |
| 2N hydrochloric acid | 7.0 g |

The materials as mentioned above were mixed at room temperature (23°C) for 24 hours to prepare the silane alkoxide hydrolyzed solution. Then, the solution was mixed with 46.16 g of the water absorbent zeolite (3A) (the gel concentration: 45%). Just after the mixing, the temperature was increased around 200°C, and then immediately solidified prior to any moldings.

(Comparative example 4)

The silane alkoxide hydrolyzed solution was prepared as mentioned in the Comparative example 3, except that the amount of methanol in the hydrolyzed solution is 86 g so as to increase the alcohol content, not purified water, to prevent the generation of the heat. Then the solution was mixed with 46.16 g of the water absorbable zeolite (3A) (gel concentration: 29%). While the generation of the heat after the mixing was prevented, the gelatinization thereof was not occurred, and it was precipitated.

(Comparative example 5)

| Aminopropyl trimethoxy silane silane coupling agent (APTMS) | 15 g |
| Methanol | 120 g |
| Ethyleneglycol diglycidyl ether | 2 g |

The materials as mentioned above were mixed at room temperature (23°C) for 24 hours to prepare the hydrolyzed solution. Then, the solution was mixed with 16.4 g of the hydrophobic zeolite (HiSiV) (the gel concentration: 22%). The gelatinization thereof was not occurred, and it was precipitated.

(Comparative example 6)

The example was performed in accordance with the Comparative example 3, except that hydrochloric acid is changed to acetic acid to prepare the hydrolyzed solution. Then, it was mixed with 46.16 g of the water absorbable zeolite (3A) (the gel concentration: 45%). The gelatinization thereof was not occurred, and it was precipitated.

**Industrially applicability**

According to the present invention, it is possible to manufacture the adsorbent-containing compact without the use of any molds and in any forms depending on its application with high productivity and accuracy, and to use in the adsorption technology.

**Claims**

1. A method for manufacturing adsorbent-containing compact comprising the steps of:

   forming a silane alkoxide hydrolyzed solution containing silane alkoxide and hydrochloric acid;
   mixing hydrophobic zeolite in said silane alkoxide hydrolyzed solution;
   hardening the mixed wet gel containing zeolite in to a wet gel body having more than 0% to 10% or lower of deformation ratio;
   cutting said wet gel body;
   drying said cut wet gel body to form a dry gel body.

2. The method for manufacturing adsorbent-containing compact according to claim 1, wherein it is formed such that the content of said hydrophobic zeolite in said dry gel body is in the range of 70 to 98 weight%.

3. The method for manufacturing adsorbent-containing compact according to claim 2, wherein it is formed such that the content of said hydrophobic zeolite in said dry gel body is in the range of 80 to 95 weight%.

4. The method for manufacturing adsorbent-containing compact according to any one of claims 1 to 3, wherein alcohol and water is contained as the solvent of said silane alkoxide hydrolyzed solution, and
   the content of the water is in the range of 5 weigh% or more.

5. The method for manufacturing adsorbent-containing compact according to any one of claims 1 to 4, wherein the alcohol of the solvent of said silane alkoxide hydrolyzed solution has 4 or more of carbon atoms.

6. The method for manufacturing adsorbent-containing compact according to any one of claims 1 to 5, wherein the concentration of hydrochloric acid (HCl) in the silane alkoxide hydrolyzed solution containing said hydrochloric acid is in the range of 0.01 to 0.4 in the molar ratio of [HCl] / [TEOS].

7. The method for manufacturing adsorbent-containing compact according to any one of claims 1 to 6, further comprising the step of adding a water-based surface conditioner prior to said step of mixing the hydrophobic zeolite.

8. The method for manufacturing adsorbent-containing compact according to claim 7, wherein said water-based surface conditioner is alcoholic alkoxylate.

9. The method for manufacturing adsorbent-containing compact according to claim 7, wherein said water-based surface conditioner is a fluorinated surfactant.

10. The method for manufacturing adsorbent-containing compact according to any one of claims 1~9, wherein the content of said water-based surface conditioner is in the range of 0.01 to 1 weight% relative to the solid content of the silane alkoxide hydrolyzed solution.

11. The method for manufacturing adsorbent-containing compact according to any one of claims 1~10, wherein the hydrophobic zeolite in said step of mixing the hydrophobic zeolite is in paste form.

12. The method for manufacturing adsorbent-containing compact according to claim 11, wherein said hydrophobic zeolite in paste form is originated from mixing it with isopropyl alcohol.

13. The method for manufacturing adsorbent-containing compact according to any one of claims 1~12, wherein the drying temperature in said step to form the dry gel body is in the range of 23 to 120˚C of a first drying.

14. The method for manufacturing adsorbent-containing compact according to any one of claims 1~13, further comprising the step of drying said dry gel body at 140˚C or more as a second drying.

15. The method for manufacturing adsorbent-containing compact according to claim 14, wherein the temperature of said second drying is in the range of 200 to 350˚C.

16. The method for manufacturing adsorbent-containing compact according to any one of claims 1~15, further comprising the step of storing said silane alkoxide hydrolyzed solution for the range of 1 week to 1 month.

17. The method for manufacturing adsorbent-containing compact according to any one of claims 1~16, wherein the sol concentration of said silane alkoxide hydrolyzed solution is in the range of 50 weight% or less.

18. The method for manufacturing adsorbent-containing compact according to any one of claims 1~17, wherein the gel concentration of said wet gel body is in the range of 30 weight% or more.

19. An adsorbent-containing compact as obtained by the method for manufacturing adsorbent-containing compact according to any one of claims 1 to 18.

**EP 2 002 889 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5293371 A
- JP 3285843 A
- JP 62297211 A
- JP 1171554 A